# EUROPÄISCHE PATENTSCHRIFT

(11) **EP 0 935 920 B1**
(45) Veröffentlichungstag und Bekanntmachung des Hinweises auf die Patenterteilung: **19.11.2003**
(21) Anmeldenummer: 99102431.6
(22) Anmeldetag: 09.02.1999
(51) Int. Cl.: F16H 25/16, F16H 53/06, A22C 11/12

(54) **Kurvengetriebe**
Cam gearing
Commande à cames

(30) Priorität: 11.02.1998 DE 29802343 U
(43) Veröffentlichungstag der Anmeldung: 18.08.1999
(73) Patentinhaber: Tipper Tie Alpina AG, 9201 Gossau (CH)
(72) Erfinder: Wälchli, Hans Dr., 8113 Boppelsen (CH); Sbalzarini, Lino, 9030 Abtwil (CH)
(74) Vertreter: Blum, Rudolf Emil Ernst

(56) Entgegenhaltungen:
- DE-U- 29 613 336
- DE-U- 29 802 343
- FR-A- 2 339 111
- PATENT ABSTRACTS OF JAPAN vol. 1996, no. 10, 31. Oktober 1996 (1996-10-31) -& JP 08 144717 A (ISUZU MOTORS LTD), 4. Juni 1996 (1996-06-04)
- PATENT ABSTRACTS OF JAPAN vol. 017, no. 093 (C-1029), 24. Februar 1993 (1993-02-24) -& JP 04 285122 A (BROTHER IND LTD), 9. Oktober 1992 (1992-10-09)

## Beschreibung

Die Erfindung betrifft ein Kurvengetriebe gemäss Oberbegriff von Anspruch 1.

Kurvengetriebe dieser Art, wie sie zum Beispiel in JP 08 144 177 beschrieben sind, werden für verschiedenste Anwendungen eingesetzt, insbesondere zur Steuerung mechanischer Abläufe. Als Beispiel seien Füllmaschinen für Würste genannt, bei denen die gefüllte Wursthülle in einzelne Würste unterteilt wird, indem Verdrängerorgane, welche z. B. von einem Scherenpaar gebildet werden, zunächst die Verpackungshülle einschnüren und danach eine brätfreie Zone schaffen. Die Bewegung der Verdrängerorgane wird, wie in DE-U-296 13 336.1 beschrieben, von einem Kurvengetriebe gesteuert.

In der Vorrichtung gemäss DE-U-296 13 336.1 wird ein Wulstkurvengetriebe verwendet, wodurch Änderungen der Drehrichtung der Rollen des Eingriffglieds vermieden werden. Dadurch wird der Verschleiss reduziert.

Dennoch bleibt der Verschleiss eines der Hauptprobleme von Kurvengetrieben und es stellt sich deshalb die Aufgabe, ein Kurvengetriebe der eingangs genannten Art derart auszugestalten, dass der Verschleiss weiter vermindert wird.

Diese Aufgabe wird vom Kurvengetriebe gemäss Anspruch 1 gelöst.

Durch Verwendung einer Druckrippe, welche in unverformtem Zustand über die Kurvenflanke herraussteht und von der Rolle beim Abrollen elastisch verformt wird, ergibt sich dauernder und guter Reibkontakt zwischen Rolle und Kurvenflanke. Dadurch kann die Rolle besser beschleunigt werden, auch in Situationen, in welchen sie bei konventionellen Getrieben nicht oder nur kaum im Kontakt mit der Kurvenflanke wäre. Es zeigt sich, dass durch diese Massnahme der Abrieb stark reduziert wird.

In einer einfach herstellbaren Ausführung wird die Druckrippe von einem Kunststoffelement gebildet, insbesondere von einem Gummi, der in eine Vertiefung der Kurvenflanke einvulkanisiert ist. Durch die haftende Verbindung zwischen Gummi und Kurvenglied wird es möglich, auch konkave Kurven mit einer Druckrippe zu versehen.

Besonders einfach ist die Herstellung, wenn die Vertiefung in einem Randbereich der Kurvenflanke verläuft, derart, dass sie nach zwei Seiten offen und daher gut zugänglich ist.

Der Einsatz einer Druckrippe ist insbesondere bei Kurvenwülsten, aber z.B. auch bei Kurvennuten vorteilhaft, da solche Kurvengetriebe normalerweise mit einem gewissen Spiel zwischen Rollen und Kurvenflanken hergestellt werden müssen. Wird mindestens eine der Flanken mit einer Druckrippe versehen, so wird ein dauernder Reibschluss zwischen Flanken und Rollen erreicht, wodurch ein Mitdrehen der Rollen gewährleistet wird und plötzliche Beschleunigungen vermieden werden.

Das erfindungsgemässe Kurvengetriebe eignet sich für Anwendungen aller Art, insbesondere aber auch zur Herstellung wurstartiger Verpackungen in einer Vorrichtung gemäss DE-U-296 13 336.1.

Weitere Vorteile und Ausführungen ergeben sich aus den abhängigen Ansprüchen und aus der nun folgenden Beschreibung eines Ausführungsbeispiels anhand der Figuren. Dabei zeigen,
Figur 1 eine Achsialansicht eines erfindungsgemässen Getriebes,
Figur 2 einen radialen Schnitt durch das Getriebe von Fig. 1,
Figur 3 einen Detailschnitt durch eine unbelastete Druckrippe,
Figur 4 einen Detailschnitt durch eine belastete Druckrippe, und
Figur 5 einen Schnitt durch die Druckrippe bei deren Herstellung.

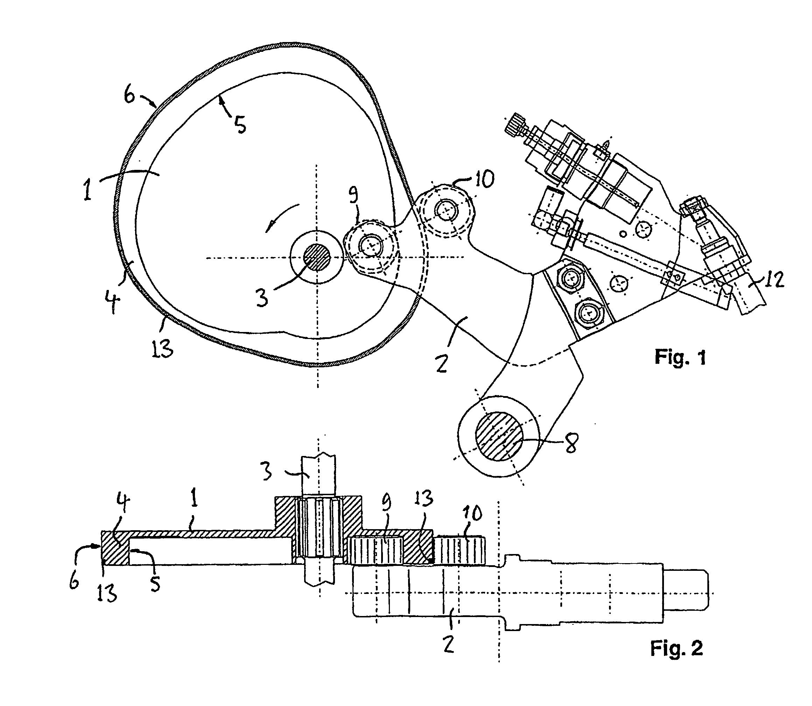

Die Figuren 1 und 2 zeigen eine Ausführung der Erfindung, wie sie zum Beispiel bei einer Vorrichtung gemäss DE-U-296 13 336.1 eingesetzt werden kann.

Das Getriebe umfasst ein Kurvenglied 1 und ein Eingriffglied 2. Das Kurvenglied 1 ist über eine Welle 3 angetrieben und hat die Form einer Wulstkurvenscheibe mit einer Wulst 4. Die Seitenwände der Wulst 4 bilden die innere und äussere Kurvenflanke 5 bzw. 6.

Das Eingriffsglied 2 ist um eine Achse 8 schwenkbar und besitzt zwei Rollen 9, 10 aus Stahl, von denen eine auf der inneren Kurvenflanke 5, die andere auf der äusseren Kurvenflanke 6 läuft. Der Abstand zwischen den zwei Rollen ist fest. Der Verlauf der Kurvenflanken ist so gewählt, dass die Rollen 9, 10 in allen Getriebepositionen ein Spiel von einigen Hundertstel Millimeter aufweisen.

Die Drehung des Kurvenglieds 1 bewirkt eine Schwenkbewegung des Eingriffsglieds 2, die z.B. an ein Werkzeug 12 weitergegeben werden kann.

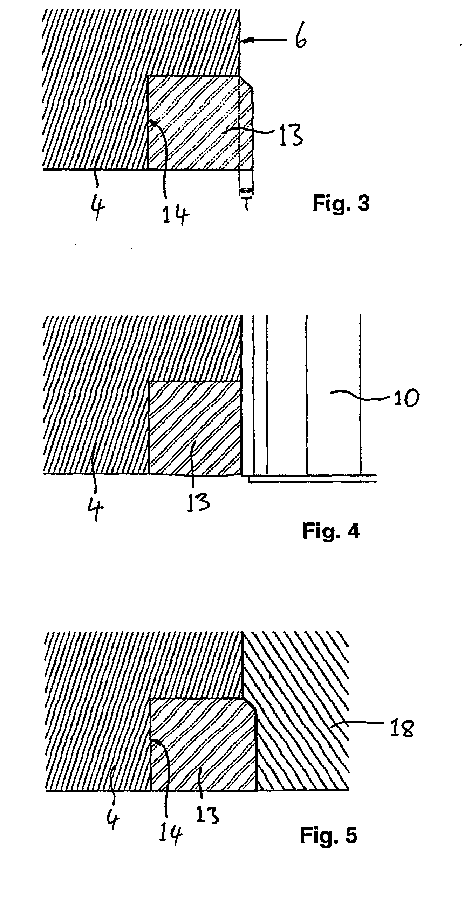

Wie insbesondere aus Fig. 3 sichtbar wird, ist entlang der Aussenkante der äusseren Kurvenflanke 6 eine Druckrippe 13 angeordnet. Diese erstreckt sich um den ganzen Umfang der Kurvenflanke 6. Sie wird von einem Gummikörper gebildet, der in einer Vertiefung 14 liegt. Die Vertiefung 14 hat typische Kantenlängen von 3 mm und die Druckrippe 13 überragt die Kurvenflanke 6 um eine Höhe T von ca. 0.5 mm.

Wie aus Fig. 4 ersichtlich, wird die Druckrippe 13 von der sie überfahrenden Rolle 10 elastisch verformt und im wesentlichen vollständig in die Vertiefung 14 gedrängt. Die Rollenkraft liegt somit in erster Linie auf der metallenen Kurvenflanke 6 auf, welche im Gegensatz zur Druckrippe 13 diese Kraft aufzunehmen vermag.

Durch die Druckrippe 13 wird jedoch erreicht, dass Rolle 10 ständig in Reibkontakt mit dem Kurvenglied 1 ist, selbst wenn die Kraft des Eingriffsglieds 2 z.B. von der Seite der anderen Rolle 9 her wirkt. Somit wird eine gleichmässige Drehung der Rolle 10 gewährleistet, wodurch der Abrieb, der in konventionellen Lösungen in erster Linie auf schlagartige Beschleunigung der Rollen zurückzuführen ist, vermieden wird. Auch die Rolle 9 hat dank der Druckrippe 13 einen besseren Kontakt zum Kurvenglied 1, da die Druckrippe 13 die Rolle 10 von der äusseren Kurvenflanke 6 wegdrängt und somit die Rolle 9 gegen die innere Kurvenflanke 5 drückt.

Ein guter Reibschluss zwischen den Rollen 9, 10 und dem Kurvenglied 1 wird dadurch gewährleistet, dass die Höhe T, um die die Druckrippe 13 die eigentliche Kurvenflanke 6 überragt, wesentlich grösser ist als das Spiel zwischen den Rollen und dem Kurvenglied, so dass ständig eine elastische Kraft auf mindestens eine der Rollen wirkt.

Es ist auch denkbar, alternativ oder zusätzlich zur Druckrippe 13 eine weitere Druckrippe im Bereich der inneren Kurvenflanke 5 vorzusehen.

Die Druckrippe 13 wird, wie bereits erwähnt, von einem Gummikörper gebildet. Gummi wird als Material bevorzugt, da es elastisch ist und einen hohen Reibungskoeffizienten aufweist.

Damit die Druckrippe 13 sich auch entlang konkaver Kurvenbereiche an die Kurvenflanke anschmiegt, sollte sie fest in der Vertiefung 14 gehalten sein. In der vorliegenden Ausführung der Erfindung wird dies erreicht, indem der Gummi in die Vertiefung 14 einvulkanisiert ist. Hierzu wird bei der Herstellung eine Konturform 18 über die Wulst 4 gelegt, wie dies in Fig. 5 zu sehen ist. Dann wird in die so entstehende Nut 14 das Gummimaterial eingebracht und vulkanisiert. Danach wird die Konturform 18 entfernt. Diese einfache Herstellungsweise ist möglich, weil die Vertiefung 14 am Rand der Kurvenflanke 6 angeordnet und nach zwei Seiten offen ist.

Eine Druckrippe 13 wie oben beschrieben kann auch in anderen Kurvengetrieben eingesetzt werden, um einen zuverlässigen Reibschluss zwischen Kurvenflanke und Rolle zu gewähren. So ist diese Konstruktion auch besonders geeignet für Nutkurvenscheiben, um die in der Nut laufende Rolle zur Drehung anzutreiben.

## Patentansprüche

1. Kurvengetriebe mit einem Kurvenglied (1) mit mindestens einer Kurvenflanke (5, 6) und mit einem Eingriffsglied (2) mit mindestens einer auf der Kurvenflanke rollenden Rolle (9, 10), mit mindestens einer Druckrippe (13), die sich mindestens über einen Teil des Umfangs der Kurvenflanke (6) erstreckt, und die von der auf der Kurvenflanke rollenden Rolle (10) elastisch verformbar ist, wobei die Druckrippe (13) von einem länglichen Körper gebildet ist, **gekennzeichnet dadurch, dass** die Druckrippe (13) von einer sich entlang der Kurvenflanke (6) erstreckenden Vertiefung (14) gehalten ist und in unverformtem Zustand über die Kurvenflanke (6) heraussteht.

2. Kurvengetriebe nach Anspruch 1, **dadurch gekennzeichnet, dass** die Kurvenflanke aus Metall und die Druckrippe (13) aus Kunststoff ist.

3. Kurvengetriebe nach einem der vorangehenden Ansprüche, **dadurch gekennzeichnet, dass** die Druckrippe (13) mindestens teilweise aus Gummi ist.

4. Kurvengetriebe nach Anspruch 3, **dadurch gekennzeichnet, dass** der längliche Körper ein in die Vertiefung (14) einvulkanisierter Gummi ist.

5. Kurvengetriebe nach einem der Ansprüche 3 oder 4, **dadurch gekennzeichnet, dass** die Vertiefung (14) in einem Randbereich der Kurvenflanke (6) verläuft, derart, dass sie nach zwei Seiten offen ist.

6. Kurvengetriebe nach einem der vorangehenden Ansprüche, **dadurch gekennzeichnet, dass** das Kurvenglied eine Kurvenwulst (4) oder Kurvennut aufweist, von welcher das Eingriffsglied (2) zweiseitig geführt ist, wobei die mindestens eine Druckrippe (13) derart dimensioniert ist, dass die Rolle bzw. Rollen (9, 10) in allen Stellungen in Reibschluss mit dem Kurvenglied (1) stehen.

7. Kurvengetriebe nach Anspruch 6, **dadurch gekennzeichnet, dass** an beiden Kurvenflanken der Kurvenwulst (4) bzw. Kurvennut eine Druckrippe (13) angeordnet ist.

## Claims

1. Cam gear with a curved member (1) with a least one curved flank (5, 6) and with an engagement member (2) with at least one roller (9, 10) rolling on the curved flank, with at least one pressure rib (13), which extends at least over a part of the periphery of the curved flank (6) and which is elastically deformable by the roller (10) rolling on the curved flank, wherein the pressure rib (13) is formed by a long body, **characterised in that** the pressure rib (13) is held by a cavity (14) extending along the curved flank (6) and in an undeformed state prolongs over the curved flank (6).

2. Cam gear according to claim 1, **characterised in that** the curved flank is of metal and the pressure rib (13) is of plastics.

3. Cam gear according to one of the preceding claims, **characterised in that** the pressure rib (13) is at least partially of rubber.

4. Cam gear according to claim 3, **characterised in that** the long body is a rubber vulcanised into the cavity (14).

5. Cam gear according to one of the claims 3 or 4, **characterised in that** the cavity (14) runs in an edge area of the curved flank (6) such that it is open to two sides.

6. Cam gear according to one of the preceding claims, **characterised in that** the curved member comprises a curved bulge (4) or curved notch, by which the engagement member (2) is guided from two sides, wherein the at least one pressure rib (13) is dimensioned such that the roller or rollers (9, 10) are in all positions in friction contact with the curved member (1).

7. Cam gear according to claim 6, **characterised in that** a pressure rib (13) is arranged on both curved flanks of the curved bulge (4) or of the curved notch.

## Revendications

1. Commande à cames, avec un corps de came (1) comportant au moins un contour de came (5, 6), avec un levier oscillant (2) comportant au moins un galet de came (9, 10) roulant sur le contour de came, et avec au moins un bourrelet de pression (13) s'étendant sur au moins une partie de la périphérie du contour de came (6), ce bourrelet étant élastiquement déformable par le galet (10) roulant sur le contour de came, le bourrelet (13) ayant la forme d'un corps allongé, **caractérisée en ce que** le bourrelet (13) est maintenu par une gorge (14) qui s'étend le long du contour de came (6) et que lorsqu'il n'est pas déformé le bourrelet dépasse le contour de came (6).

2. Commande à cames selon la revendication 1, **caractérisée en ce que** le contour de came est métallique et le bourrelet (13) en matière plastique.

3. Commande à cames selon une des revendications 1 ou 2, **caractérisée en ce que** le bourrelet (13) est au moins partiellement en caoutchouc.

4. Commande à cames selon la revendication 3, **caractérisé en ce que** le corps allongé est une pièce en caoutchouc vulcanisée dans la gorge (14).

5. Commande à cames selon une des revendications 3 ou 4, **caractérisée en ce que** la gorge (14) s'étend sur un bord du contour de came (6) de manière à être ouverte de deux cotés.

6. Commande à cames selon une des revendications précédentes, **caractérisée en ce que** le corps de came comporte un rebord (4) ou une rainure guidant le levier oscillant (2) de manière bidirectionnelle, au moins un bourrelet (13) étant dimensionné de manière à ce qu'en toutes les positions le ou les galets (9, 10) soient entraînés en friction par le corps de came (1).

7. Commande à cames selon la revendication 6, **caractérisée en ce qu'**un bourrelet (13) est disposé près de chacun des deux contours de came du rebord (4), respectivement de la rainure.
